# EUROPÄISCHE PATENTSCHRIFT

(11) **EP 2 588 301 B1**
(45) Veröffentlichungstag und Bekanntmachung des Hinweises auf die Patenterteilung: **17.08.2016**
(21) Anmeldenummer: 11719163.5
(22) Anmeldetag: 25.03.2011
(51) Int. Cl.: B30B 11/22, B30B 11/26, B30B 15/06, B01J 2/20

(54) **VORRICHTUNG ZUR HERSTELLUNG VON PRESSKÖRPERN**
DEVICE FOR PRODUCING PRESSED BODIES
DISPOSITIF DE FABRICATION DE CORPS COMPRIMÉS

(30) Priorität: 25.03.2010 DE 102010012838
(43) Veröffentlichungstag der Anmeldung: 08.05.2013
(73) Patentinhaber: Pusch, Guido, 56242 Marienrachdorf (DE)
(72) Erfinder: Pusch, Guido, 56242 Marienrachdorf (DE)
(74) Vertreter: Hannke, Christian
(86) Internationale Anmeldenummer: PCT/EP2011/001511
(87) Internationale Veröffentlichungsnummer: WO 2011/124332

(56) Entgegenhaltungen:
- WO-A1-99/52706
- WO-A1-02/072339
- CA-A1- 2 354 648
- US-A- 3 030 876

## Beschreibung

Die vorliegende Erfindung bezieht sich auf eine Vorrichtung zur Herstellung von Presskörpern aus biologischem Material mit einem Aufnahmeraum zur Aufnahme des biologischen Materials, wobei der Aufnahmeraum zumindest eine Lochwand mit einer Vielzahl von Öffnungen und mindestens einem in dem Aufnahmeraum angeordneten und gegenüber dem Aufnahmeraum bewegbaren Stempel aufweist.

Aus dem bisherigen Stand der Technik sind sowohl rotierende als auch vertikal angeordnete Ringmatrizen oder Flachmatrizen bekannt. Spezielle Rollen pressen das Material durch Kanäle, deren Durchmesser mit dem Endprodukt übereinstimmt. Am Kanalende werden die Presskörper auf die gewünschte Länge abgeschnitten, häufig mittels rotierender Schneiden.

So offenbart beispielsweise die WO 99/52706 eine Pelletpressmaschine, bei welcher ein zu verpressendes Material von oben in einen offenen Aufnahmeraum eingeführt wird, um anschließend als langer Strang verpresst zu werden. Dieser wird in einem letzten Schritt mittels einer drehbaren Schneidvorrichtung in der gewünschten Länge zurecht geschnitten. Eine Pelletmaschine mit den Merkmalen des Oberbegriffs des Anspruchs 1 wird in der CA 2354648 A1 beschrieben. Für den Pressvorgang wird hier eine statische Kammer offenbart, welche von oben mit zu verpressendem Material gefüllt wird. Im sich anschließenden Pressvorgang wird das eingefüllte Material mittels Pressstempeln durch wenigstens eine Matrize hindurch geführt und über eine Pelletablaufrutsche abgeführt.

Die Druckschrift US 3.030.876 offenbart eine Maschine zur Verarbeitung von Erntegut zu Presslingen, vorzugsweise von Heu. Sie umfasst einen Pressstempel, der über eine Stange in einen Aufnahmeraum gedrückt wird und so das eingeführte Material vorpresst. Die Einführung erfolgt von der gleichen Seite wie das Vorpressen.

Der vorliegenden Erfindung liegt die Aufgabe zu Grunde, eine Vorrichtung zur Herstellung von Presskörpern aus biologischem Material zur Verfügung zu stellen, welche den Pressvorgang effizient gestaltet. Dies wird erfindungsgemäß durch eine Vorrichtung nach Anspruch 1 erreicht. Vorteilhafte Ausführungsformen und Weiterbildungen sind Gegenstand der Unteransprüche.

Die erfindungsgemäße Vorrichtung weist zur Herstellung von Presskörpern aus biologischem Material einen Aufnahmeraum zur Aufnahme des biologischen Materials auf, wobei der Aufnahmeraum zumindest eine Lochwand mit einer Vielzahl von Öffnungen und mindestens einem in dem Aufnahmeraum angeordneten und gegenüber dem Aufnahmeraum bewegbaren Stempel aufweist. Der Stempel selbst weist mehrere Pressstifte zum Durchpressen des Materials durch die Öffnungen auf. Weiterhin umfasst der Aufnahmeraum ein Öffnungsmittel zum Verschließen der Oberseite des Aufnahmeraumes als auch eine bewegliche Seiten-wand, welche senkrecht zur Pressrichtung bewegbar ist und somit einer Vorkomprimierung des biologischen Materials dient.

Mit der erfindungsgemäßen Vorrichtung wird die Festigkeit der Presskörper signifikant erhöht. Durch die Pressstempelmodifikation wird sowohl grobes als auch feines biologisches Material gezielt durch die Öffnungen der Lochwand gepresst. Grobes biologisches Material wie beispielsweise Fasermaterial oder Hackgut wird während des Pressvorgangs durch die Pressstempelmodifikation vorteilhaft gleichzeitig automatisch zerkleinert und besonders bevorzugt durch eine beheizbare Matrize gepresst. Die Presskörper, häufig auch als Pellets bezeichnet, sind somit während des Transportprozesses von der Herstellung bis letztlich zum Verbraucher stabiler gegenüber Reibung und Erschütterung, was auch gleichzeitig in reduzierter Bildung von Feinmaterial resultiert. Presskörper aus biologischem Material, insbesondere aus biologischem Mischmaterial, sind vielseitig einsetzbar und können aus jeglichem biologischen Häcksel - und/oder Faserbasismaterial, , welches zudem beim Durchpressen durch die beheizbare Matrize automatisch zerkleinert wird, wie beispielsweise Heu, Stroh, Holz, Miscanthus, Switch-Gras, Schilf, Sorghum, Gärreste aus der Trocken- und Nassfermentation, Hackschnitzeln, Papier oder Baumwolle, hergestellt und mit Additiven, wie beispielsweise Vitaminen, Bindemittel oder Granulat, versetzt sein und werden beispielsweise für Befeuerungs- und Vergasungsanlagen, in der Futterindustrie als Kraftfutter, z.B. für die Zucht oder den Sport, für die Entsorgung oder Verwertung von organischen Materialien, zur Düngeraufbereitung in der Landwirtschaft, für Isolationszwecke im Bauoder auch für die Herstellung von Streu für Kleintiere verwendet. Besonders vorteilhaft erweist sich die vorliegende Erfindung, da im Gegensatz zum Stand der Technik auch nasses biologisches Material direkt verarbeitet werden kann, ohne dass dieses mehrstufig und aufwendig getrocknet werden muss, um eine Minimierung der Restfeuchte zu erhalten. Mit der vorliegenden Erfindung kann unter gleichbleibender Produktqualität biologisches Material verarbeitet werden, welches eine Restfeuchte von 1 bis 100 Gewichts-% aufweist, also sowohl vollkommen trocken, feucht oder nass vorliegen kann. Mit Hilfe der vorliegenden Erfindung kann unter gleichzeitiger Energieeinsparung somit effektiver produziert werden.

Vorzugsweise sind daher die Pressstifte derart gestaltet, dass sie in Längsrichtung gleichmäßig hinsichtlich ihres Querschnittes sind. Die Pressstifte weisen vorteilhaft über die gesamte Länge zueinander parallele Seiten auf, was zu einem gleichmäßigen Querschnitt führt, wobei auch alle Pressstifte zu einander parallel angeordnet sind. Dies ermöglicht einen konstanten Pressvorgang und konstanten Druckbedingungen und gleichbleibende Produktqualität. Vorteilhaft sind die Pressstifte untereinander gleichartig ausgebildet, wobei mindestens zwei Pressstifte vorhanden sind. Diese sind ist bevorzugt zentrisch angeordnet. Darüber hinaus ist auch eine Vielzahl von Pressstiften möglich. Die genaue Anzahl ist abhängig von der Größe des Durchmessers der Pressstifte selbst und von der Größe der Grundfläche des Stempels, auf der sie angeordnet sind, wobei diese Anordnung sowohl zufällig als auch kubisch, bevorzugt hexagonal, ausgebildet ist, um so die Grundfläche bestmöglich auszunutzen. Der Querschnitt der Pressstifte ist vorteilhaft kreisförmig, kann aber auch eckig, bevorzugt quadratisch oder auch ellipsoidal ausgebildet sein. Die Öffnungen der Matrizen und der Rohrkanäle entsprechen der Ausführung der Pressstifte des Stempels. Die Pressstifte selbst sind zueinander derart beabstandet, dass ein stabiler Aufbau der Matrizen gewährleistet ist. Zudem wird der Lagerverschleiß, wie er bei Flach- oder Kollermatrizen entsteht, ausgeschlossen. Gleichzeitig wird die höchstmögliche Anzahl an Pressstiften verwendet, wobei die Anzahl 2 -500, bevorzugt 10 - 250, besonders bevorzugt 30 - 80 Pressstifte darstellen kann.

Eine weitere vorteilhafte Ausführungsform zeichnet sich dadurch aus, dass eine Antriebseinrichtung zum Antrieb des Stempels vorhanden ist. Diese wird bevorzugt hydraulisch betrieben. Dies ermöglicht eine stufenlose Geschwindigkeitseinstellung, eine einfache Umkehr der Bewegungsrichtung sowie eine gleichförmige, fein abstimmbare Bewegung. Darüber hinaus ist es auch denkbar, die Antriebseinrichtung elektrisch, mechanisch oder pneumatisch zu betreiben.

Eine weitere vorteilhafte Ausführungsform zeichnet sich dadurch aus, dass der Stempel als gegenüber dem Aufnahmeraum beweglicher Kolben angeordnet ist. Dadurch wird eine gleichförmig gerichtete, sich wiederholende Linearbewegung des Stempels durch den Aufnahmeraum und wieder zurück in die Ausgangsposition realisiert. Die Bewegung selbst erfolgt bevorzugt senkrecht zur Lochwand des Aufnahmeraumes.

Bei einer weiteren vorteilhaften Ausführungsform ist die erste Lochwand eine Seitenwand des Aufnahmeraumes. Diese Seitenwand ist bevorzug senkrecht zur Pressrichtung angeordnet um die Linearbewegung des Stempels auszunutzen.

Bei einer weiteren vorteilhaften Ausführung ist eine weitere Wand des Aufnahmeraumes zum Vorpressen des biologischen Materials bewegbar angeordnet. Die Bewegungsrichtung der Wand des Aufnahmeraumes erfolgt senkrecht zur Pressrichtung. Dadurch wird das biologische Material vorverdichtet und Hohlräume werden reduziert. Der Pressvorgang selbst wird effizienter und Dichteschwankungen innerhalb der Presskörper werden verhindert. Es ist auch denkbar, dass eine zusätzliche zweite Wand des Aufnahmeraumes, bevorzugt die zur genannten Wand gegenüber liegende Wand, senkrecht zur Pressrichtung bewegbar ist.

Bei einer weiteren vorteilhaften Ausführungsform ist zwischen dem Stempel und der ersten Lochwand zumindest zeitweise eine Lochwand angeordnet. Auf diese Weise wird beim Zurückfahren des Stempels in die Ausgangsposition überschüssiges Material, welches an Pressstiften haften geblieben sein kann, von diesen abgestreift. Des Weiteren zeichnet sich diese zusätzliche Lochwand als Führung für den Stempel aus. Die Öffnungen besagter Lochwand sind so ausgeprägt, dass die Pressstifte des Stempels hindurch geführt werden können.

Eine weitere vorteilhafte Ausführungsform ist dadurch gekennzeichnet, dass der Aufnahmeraum mindestens ein Öffnungsmittel aufweist, damit das biologische Material dem Aufnahmeraum zuführbar und / oder aus dem Aufnahmeraum abführbar ist. Ist ein Öffnungsmittel an der Oberseite des Aufnahmeraumes angeordnet, ist dies vorteilhaft, um eine vorher festgelegte Menge an biologischem Material dem Aufnahmeraum zuzuführen. Darüber hinaus ist es auch denkbar, dass der Aufnahmeraum mit einem Gewichtsensor, bevorzugt in und/oder an der Fläche des unteren Öffnungsmittels, welche dem Aufnahmeraum zugewandt ist, ausgestattet ist, der bei vorher festlegbarem Befüllungsgewicht ein Schließen des Öffnungsmittels an der Oberseite des Aufnahmeraumes bedingt. Dies ist besonders vorteilhaft, wenn das biologische Material mit unterschiedlichen Feuchtigkeitsgraden, wie beispielsweise mit einer geringen Restfeuchte von weniger als 10%, einer mittleren Restfeuchte bis hin zu 100% Feuchte eingesetzt wird. Der Öffnungsmechanismus selbst kann insbesondere pneumatisch, aber auch elektrisch, hydraulisch oder mechanisch gelagert sein. Die Öffnung des Aufnahmeraumes von oben kann bevorzugt durch eine Schiebebewegung oder auch mit Hilfe von Scharnieren oder durch einen Schwenkmechanismus erfolgen. Weiterhin ist es vorteilhaft, ein zweites Öffnungsmittel an der Unterseite des Aufnahmeraumes anzuordnen, da durch diese untere Öffnung unverpresstes Material schnell und sauber aus dem Aufnahmeraum entfernbar ist, wodurch eine höhere Effektivität erzeugt werden kann. Bevorzugterweise werden für die eingesetzten Öffnungsmittel ähnliche Öffnungsmechanismen eingesetzt. Es ist jedoch auch denkbar, jedes Öffnungsmittel mit einem unterschiedlichen Öffnungsmechanismus zu versehen.

Bei einer weiteren vorteilhaften Ausführungsform ist eine Abbruchvorrichtung zum Erzeugen der Presskörper vorgesehen. Diese ist in Pressrichtung, stromabwärts von der Pressvorrichtung angeordnet. Besagte Abbruchvorrichtung verfügt vorteilhaft über abgeschrägte Abschlusskanten, welche in einem Bereich von 10 - 45 ° gewinkelt sind.. Dadurch wird gewährleistet, dass die bei dem Abbruchvorgang erzeugten fertigen Presskörper auf einer Schräge auftreffen, abgleiten und abtransportiert werden. Der Abbruchvorgang selbst kann ohne weitere technische Hilfsmittel unter Ausnutzung der Schwerkraft erfolgen. Darüber hinaus könnten aber auch Schneidewerkzeuge hierfür vorgesehen sein.

Die vorliegende Erfindung ist weiterhin auf eine Anlage mit einer Vorrichtung zur Herstellung von Presskörpern aus biologischem Material insbesondere nach einer der vorangegangenen Beschreibungen und einer Zuführeinrichtung für das biologische Material, einem Aufnahmeraum für das biologische Material, einer Abfördereinrichtung für die Presskörper, welche stromabwärts bezüglich einer Pressvorrichtung zum Pressen angeordnet ist und einer Rückführungseinrichtung von überschüssigen Material zu der Vorrichtung zur Herstellung von Presskörpern gerichtet. Letztere erweist sich als vorteilhaft, da unverbrauchtes bzw. nicht verpresstes Material dem Kreislauf wieder zugeführt wird und somit eine hohe Effizienz unter Verlustminimierung besteht, d.h., dass im Gegensatz zum Stand der Technik bewusst viel Material nach dem Pressvorgang wieder rückgeführt wird. Bei einer weiteren vorteilhaften Ausführung zeichnet sich die Anlage dadurch aus, dass eine weitere vorgelagerte Zuführungseinrichtung für Flüssigkeiten und / oder Additiven angeordnet ist. Diese besagte Zuführungseinrichtung kann beispielsweise in Form einer rotierenden Trommel angeordnet sein. Darüber hinaus verfügt diese benannte Zuführungseinrichtung mindestens eine Öffnung um die entsprechenden Flüssigkeiten und / oder Additive zuzugeben. Ferner ist es auch möglich, dass die entsprechenden Flüssigkeiten und / oder Additive mittels stabilen oder flexiblen Mitteln der Zuführungseinrichtung zugeführt werden. Beispielsweise ist mindestens eine röhrenförmige Einrichtung, bevorzugt eine Düse zum Zuführen vorgesehen, wobei die Zuführung selbst beispielsweise mit Hilfe einer Sprühvorrichtung zur homogenen Applikation oder auch durch einfaches Zufließen erfolgt. Die Anordnung der röhrenförmigen Vorrichtung ist je nach Füllstand ausgebildet.

Des Weiteren ist denkbar, dass der Aufnahmeraum mit mindestens einem Sensor zur Optimierung des Vorpressdrucks ausgestattet ist. Dies kann beispielsweise durch Integration eines Flächendrucksensors an einer oder beiden bewegbaren Seitenwänden des Aufnahmeraumes erfolgen. Ferner ist auch denkbar, dass an den Stirnflächen der Pressstifte selbst oder an den Stirnflächen der versenkbaren Körper des oberen Öffnungsmittels Drucksensoren angeordnet sind. Dies kann separat, aber auch durch Kombination aller genannten Anordnungen erfolgen, um so beispielsweise in alle Raumrichtungen gezielt vorzuverdichten. Zudem ist es denkbar, dass im Aufnahmeraum 2 oder an anderer Stelle zumindest ein Sensor angeordnet ist, welcher die Feuchtigkeit des biologischen Materials detektiert und bevorzugt den Pressvorgang reguliert, besonders im Hinblick auf den Vorpressdruck durch die bewegbaren Seitenwände, den Pressdruck des Stempels und der Temperatur der Heizmatrize.

Weitere vorteilhafte Ausführungsformen ergeben sich aus den beigefügten Zeichnungen. Darin zeigen:
- Fig. 1: eine Darstellung des Stempels der erfindungsgemäßen Vorrichtung;
- Fig. 2: perspektivische Darstellung eines Teils einer erfindungsgemäßen Vorrichtung;
- Fig. 3: eine Schnittdarstellung der erfindungsgemäßen Vorrichtung;
- Fig. 4a: eine weitere Schnittdarstellung einer erfindungsgemäßen Vorrichtung;
- Fig. 4b: eine weitere Schnittdarstellung einer erfindungsgemäßen Vorrichtung;
- Fig. 5: eine Darstellung eines Teils einer erfindungsgemäßen Vorrichtung;
- Fig. 6: eine Darstellung einer Heizmatrize;
- Fig. 7a: eine Schnittdarstellung eines Teils einer erfindungsgemäßen Vorrichtung;
- Fig. 7b: ein Querschnitt eines Teils einer erfindungsgemäßen Vorrichtung;
- Fig. 8a: eine weitere Teildarstellung einer erfindungsgemäßen Vorrichtung;
- Fig. 8b: eine weitere Teildarstellung einer erfindungsgemäßen Vorrichtung;
- Fig. 9a: einen Querschnitt eines Teils einer erfindungsgemäßen Vorrichtung;
- Fig. 9b: eine weitere Einrichtung einer erfindungsgemäßen Vorrichtung;
- Fig. 10a: eine Explosionsdarstellung eines Teils einer erfindungsgemäßen Vorrichtung;
- Fig. 10b: eine Explosionsdarstellung eines Teils einer erfindungsgemäßen Vorrichtung;
- Fig. 11: eine Darstellung einer weiteren vorteilhaften Ausführungsform.

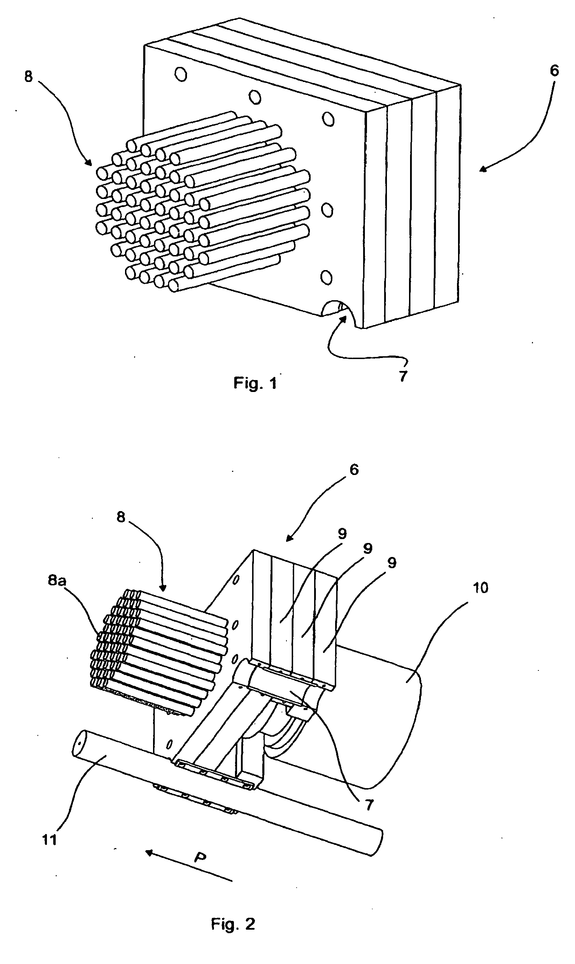

Fig. 1 zeigt eine Darstellung des Stempels 6 einer erfindungsgemäßen Vorrichtung. Besagter Stempel 6 weist einen Träger 9 auf, welcher bevorzugt aus mindestens zwei flächig aneinander gereihten Einzelbausteinen angeordnet ist. Besagte Einzelbausteine weisen bevorzugt mindestens jeweils eine durchgehende Öffnung zur Fixierung auf. Die Form des Trägers 9 kann eckig, bevorzugt quadratisch, oder auch rund ausgestaltet sein. Ferner ist denkbar, dass der Stempel 6 beispielsweise massiv oder hohl gestaltet ist. Darüber hinaus ist an einer Seite des Stempels 6 eine Vielzahl von Pressstiften 8 angeordnet. Besagte Pressstifte 8 weisen bevorzugt eine gleichmäßige Geometrie auf, das heißt, dass die Längsseiten der Pressstifte über die gesamte Länge parallel zueinander angeordnet sind. Bevorzugt sind alle Stifte selbst zueinander parallel angeordnet und zueinander beabstandet. Die äußere Form der Pressstifte 8 ist bevorzugt gleichmäßig zylindrisch, kann aber auch beispielsweise eckig, bevorzugt quadratisch, oder ellipsoidal sein. Des Weiteren ist die Gesamtoberfläche der Pressstifte 8 glatt ausgebildet, wobei die Stirnfläche 8a, die dem Träger 9 gegenüber liegt, eine ebene Oberfläche aufweist. Dies dient zur Kraftmaximierung des Pressvorgangs.

Materialien, die für die Pressstifte 8 in Frage kommen, sind beispielsweise Metalle, Legierungen, Keramik, keramische Verbundmaterialien oder auch Kunststoffverbundmaterialien. Der Träger 9 verfügt über mindestens eine Führungsrinne 7, welche im Volumen des Trägers oder auch an dessen Außenseite sowie einer Kombination aus beidem angeordnet sein kann. Die besagte Führungsrinne 7 entspricht in der Geometrie derjenigen des verwendeten Führungszylinders 11 (Fig. 2).

Fig. 2 zeigt eine perspektivische Darstellung eines Teils einer erfindungsgemäßen Vorrichtung, das heißt genauer eine erweiterte Darstellung des in Fig. 1 dargestellten Stempels 6. Die Antriebseinrichtung 10 bewegt den Stempel 6 linear in Pressrichtung P entlang eines mindestens eines Führungsmittels 11. Besagtes Führungsmittel 11 kann als Rohr, hohl oder auch als massiv vorliegen. Ferner ist denkbar, dass besagtes Führungsmittel 11 teilweise offen ist. Die Geometrie kann beispielsweise eckig, bevorzugt quadratisch, oder auch besonders bevorzugt rund gestaltet sein. Ferner ist auch denkbar, dass das Führungsmittel 11 als Flachschiene oder auch Spindel ausgeprägt ist. Des Weiteren kann der Stempel 6 das Führungsmittel 11 vollständig oder auch nur teilweise umschließen. Darüber hinaus können auch mehrere Führungsmittel 11 verwendet werden. Ferner ist auch eine Kombination zwischen Führungsmittel und Antrieb in linearer Form denkbar.

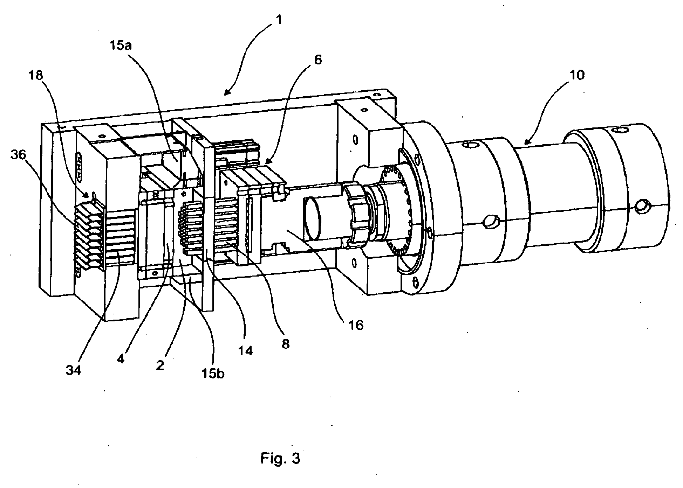

Fig. 3 zeigt eine Schnittdarstellung einer erfindungsgemäßen Vorrichtung. Man erkennt die Antriebseinrichtung 10, welche den Stempel 6 linear in bzw. gegen die Pressrichtung P mit Hilfe einer Kupplung 16 bewegt. Der Aufnahmeraum 2 selbst ist in dieser Darstellung komplett geschlossen dargestellt, das heißt, dass beide Öffnungsmittel 15a und 15b in ihrer Ausgangsposition vorliegen und der Aufnahmeraum 2 somit als geschlossen anzusehen ist. Des Weiteren ist dargestellt, dass die Pressstifte 8 eine zweite Lochwand 14 komplett durchdringen und zumindest teilweise in den Aufnahmeraum 2 hinein ragen. Besagte zweite Lochwand 14 ist speziell angeordnet, um bei der Bewegung des Stempels 6 entgegen der Pressrichtung P anhaftendes, biologisches Material von den Pressstiften abzustreifen.

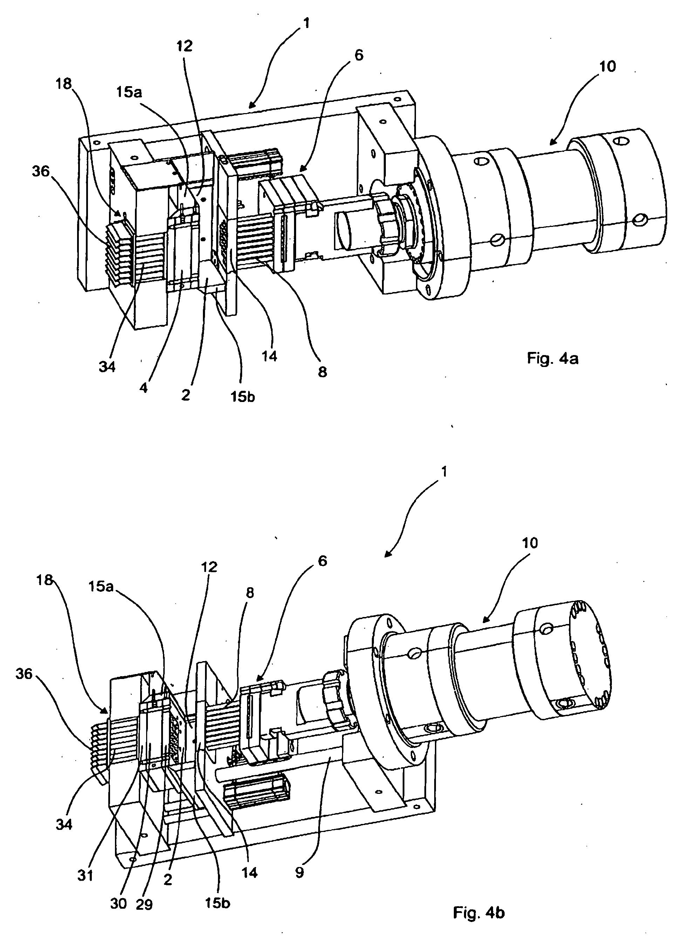

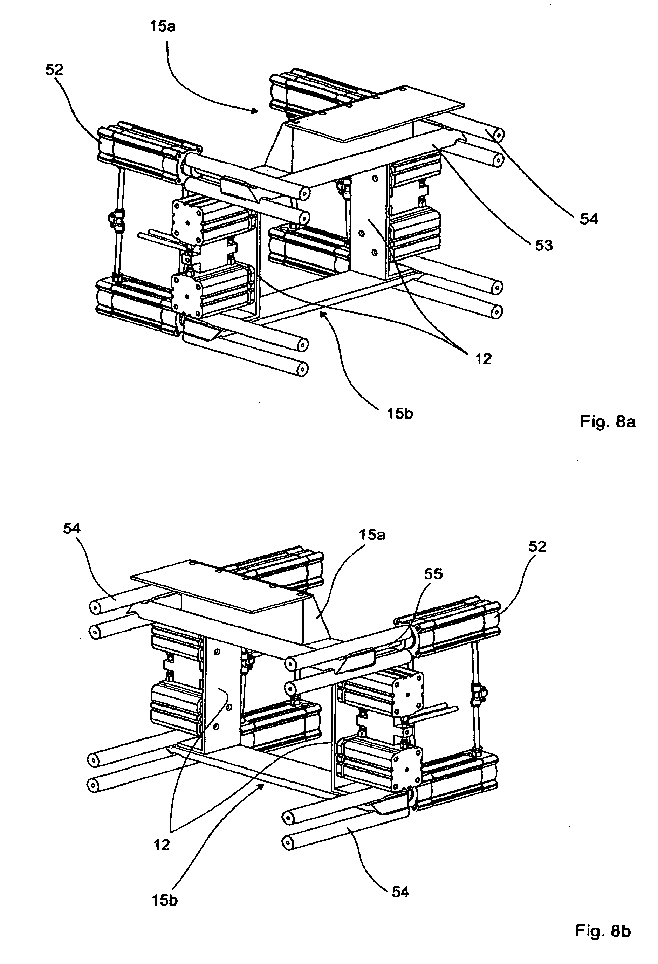

Fig. 4a zeigt eine weitere Schnittdarstellung einer erfindungsgemäßen Vorrichtung, wobei in diesem Fall das Öffnungsmittel 15a, welches die Oberseite des Aufnahmeraumes 2 verschließt, aus der Ausgangsposition ausgelenkt ist. Eine genauere Erläuterung dieses Öffnungsmechanismusses ist in Fig. 8a und 8b dargestellt. Der Aufnahmeraum 2 ist somit von oben offen und kann mit biologischem Material befüllt werden.

In diesem Stadium sind auch die Pressstifte 8 vollkommen aus dem Aufnahmeraum zurück gezogen. Darüber hinaus ist eine weitere bewegliche Seitenwand 12 dargestellt, welche senkrecht zur Pressrichtung P bewegbar ist, und somit einer Vorkomprimierung des biologischen Materials im Aufnahmeraum 2 dient. Ferner ist denkbar, dass die der Seitenwand 12 des Aufnahmeraumes 2 gegenüberliegende Wand ebenfalls in gleichem Maße bewegbar ist. Eine Vorverdichtung des biologischen Materials kann darüber hinaus auch beispielsweise mit Hilfe von Vibrationen des Aufnahmeraumes oder der gesamten Vorrichtung 1 erreicht werden. In Fig. 4b ist der gleiche schematische Aufbau wie in Fig. 4a zu sehen, wobei hier die Vorrichtung 1 perspektivisch von der Unterseite gezeigt wird.

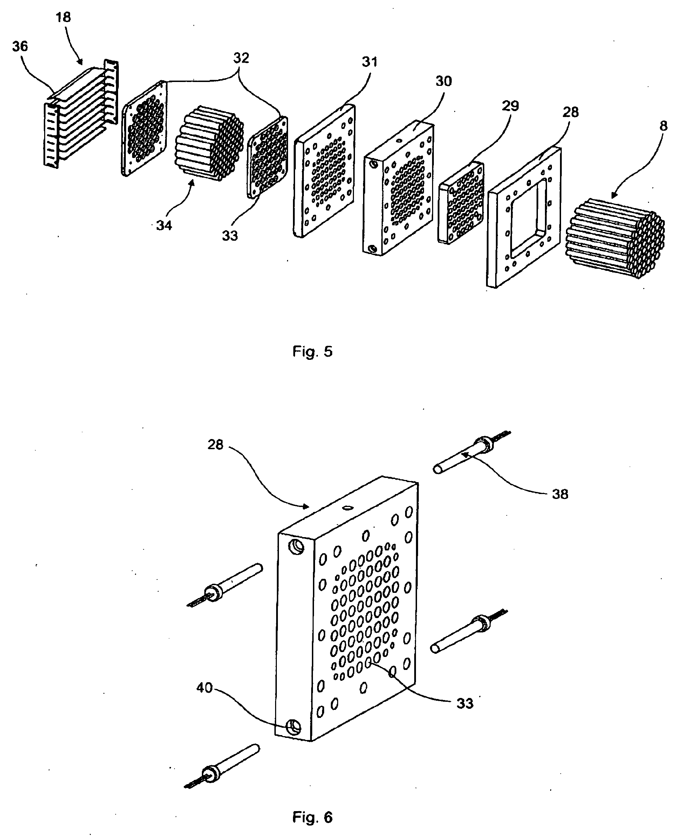

Fig. 5 zeigt eine Explosionsansicht eines Teils einer erfindungsgemäßen Vorrichtung. Man erkennt die Einzelbausteine, welche vorgesehen sind, um fertige Presskörper zu generieren. Die Pressstifte 8 pressen biologisches Material durch eine Matrize 29, welche leicht austauschbar in einem Rahmen 28 angeordnet ist. Die Öffnungen 33 können Einführschrägen aufweisen, welche sowohl das Einführen des biologischen Materials als auch der Pressstifte in die Öffnungen erleichtern. Des Weiteren wird das biologische Material durch eine Heizmatrize 30 gepresst (siehe Fig. 6), wo die Aushärtung, Aktivierung und Trocknung stattfindet. Nach dem Erhitzen des biologischen Materials, folgt im Fortgang die Trocknung des biologischen Materials während des Abkühlens. Nach einer Abstandslochwand 31 ist eine Lochscheibe 32 zur Führungsunterstützung des biologischen Materials angeordnet. Der anschließende Rohrkanal 34 wird mit einer weiteren Lochscheibe 32 stabilisiert. Zuletzt wird das gepresste, gehärtete biologische Material über eine Abbrucheinrichtung 18 in vorbestimmte Presskörpergrößen gebrochen.

Alle genannten Bauteile (29, 30, 31, 32, 34) verfügen über eine Vielzahl an Öffnungen, die durchgängig angeordnet sind. Diese Öffnungen 33 sind bei allen besagten Bauteilen bevorzugt gleich hinsichtlich ihrer Anordnung und ihres Durchmessers ausgebildet. Die Matrize 29 wird am stärksten beansprucht und ist aus diesem Grund leicht auswechselbar. Ihre Form kann beispielsweise eckig oder aber auch rund sein. Besagte Öffnungen 33 sind dem Durchmesser der Pressstifte 8 angepasst, so dass diese in die Öffnungen 33 eindringen können. Der Rahmen 28 hat bevorzugt eine zentrische Aussparung für die austauschbare Matrize 29 sowie mindestens zwei Bohrungen und / oder Gewinde zum Fixieren der Matrize 29 und / oder den weiteren Bauteilen wie beispielsweise Heizmatrize 30 oder Abstandslochwand 31.

Die Rohrkanäle 34, in denen verpresste, ausgehärtete Presskörperstränge durchlaufen, haben eine entsprechende geometrische Form wie die Matrizenöffnungen 33. Die Abbruchvorrichtung 18 setzt sich zusammen aus parallel zueinander angeordneten, bevorzugt rechteckigen Platten 35, die entsprechend an den Unterkanten der durchgehenden Öffnungen 33 des Rohrkanals 34 und der nachfolgenden Lochscheibe 32 angeordnet sind, sodass die Stränge des verpressten, biologischen Materials ohne Unterbrechung, wie beispielsweise in Form einer Kante, linear weiter bewegt werden können. Eine Stabilisierung besagter Platten 35 erfolgt beispielsweise durch ein Rahmengestell.

Dieses verfügt über mindestens eine Schiene, die beispielsweise zentriert angeordnet sein kann und zur Fixierung besagter Platten 35 dient. Ferner können auch zwei Schienen 37 seitlich der Platten 35 angeordnet sein, wobei diese beispielsweise verschraubt, vernietet, geklickt, verklebt oder auch verschweißt sein können. An mindestens einer langen Seite jeder der Platten 35 sind an den Kanten sogenannte Abbruchkanten 36 vorgesehen. Diese können abgerundet, bevorzugt aber auch kantig, ausgebildet sein. Die Matrize 29 kann beispielsweise aus Metall, Legierung, Keramik, keramischen Verbundmaterialien oder Kunststoffverbundmaterialien zusammengesetzt sein.

Fig. 6 zeigt eine Darstellung einer Heizmatrize 30, wobei man auch hier deutlich die durchgehenden Öffnungen 33 erkennen kann. Die Heizmatrize 30 kann aus einem thermisch leitfähigen Material hergestellt sein. Die Temperatursteuerung von der Heizmatrize 30 erfolgt bevorzugt mittels mindestens eines Heizelementes 38, wie beispielsweise PT 100, welches mittels Aussparungen 40 in der Heizmatrize 30 platziert werden. So kann die Temperatur leicht variiert werden, je nach physikalischen und / oder chemischen Beschaffenheiten des biologischen Materials, wie beispielsweise relative Feuchtigkeit oder Komgröße. Ferner ist auch denkbar, dass die Heizmatrize 30 mit Wasser oder Öl temperiert wird, wobei dann bevorzugt zwei Öffnungen für den Wasserzu- bzw. Wasserablauf vorgesehen sind und die Heizmatrize hohl oder kanalartig bzw. kammerartig durchzogen ist. Darüber hinaus ist mindestens ein Temperatursensor an der Heizmatrize 30 angeordnet, bevorzugt oberflächennah an den Öffnungen 33, sodass das Material einer konstanten Press- und Aushärtetemperatur / Aktivtemperatur ausgesetzt ist. Unter Aktivtemperatur ist die Temperatur zu verstehen, unter welcher die zugegebenen Additive und biologisches Material zu reagieren beginnen. Ferner ist auch denkbar mehrere oder auch alle Innenwände der Öffnungen mit derartigen Sensoren auszustatten, wobei die Sensoren im Innem der Heizmatrize die Öffnungen vollständig oder auch nur teilweise zylindrisch, spiralförmig, segmentartig oder punktuell umschließen und auch einzeln oder in Summe zur Temperaturregelung ansteuerbar sind. Die Öffnungen 33 in der Heizmatrize können weiterhin vorteilhaft Perforationen aufweisen, um beim Verpressen von nassem biologischem Material den entstehenden Dampf, insbesondere Wasserdampf, abführen zu können. Besagte Perforationen können beispielsweise klein im Verhältnis zu den Öffnungen 33 ausgebildet sein, so dass keine Gefahr besteht, dass sich biologisches Material darin absetzt und die Perforationen verstopft. Zudem sind zwischen 1 - 30, bevorzugt 2 - 20 Perforationen vorgesehen, welche entlang der Oberfläche der Öffnungen 33 linear, kreisförmig, spiralförmig oder segmentartig angeordnet sein können. Dies ermöglicht auch bei nassem biologischem Material eine gleichmäßige Presskörperstruktur, insbesondere eine konstante Presskörperdichte und -stabilität.

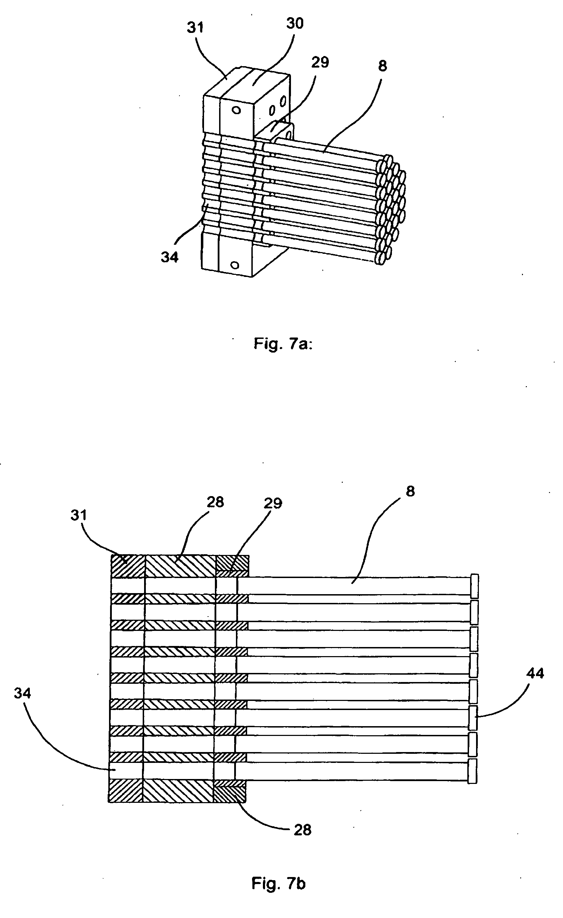

In Fig. 7a ist eine Schnittdarstellung eines Teils einer erfindungsgemäßen Vorrichtung dargestellt. Man sieht einen Ausschnitt der zusammengesetzten Bauteile aus Fig. 5, wobei die Pressstifte 8 in die Öffnungen 33 der austauschbaren Matrize 29 eindringen. Der dargestellte Rohrkanal ist hierbei bereits mit biologischem Material gefüllt (nicht dargestellt). Fig. 7b zeigt einen entsprechenden Querschnitt von Fig. 7a. Man erkennt, dass die Pressstifte 8 an der zur Matrize 29 gegenüber liegenden Seite eine Verbreiterung 44 erfahren, bevorzugt in Form eines Kopfes, dessen Größe so gewählt ist, dass die parallel angeordneten Pressstifte 8 sich nicht gegenseitig behindern. Der Pressstiftkopf 44 ist derart ausgebildet, dass bei der Rückwärtsbewegung des Stempels 6 entgegen der Pressrichtung P, die Pressstifte 8 wieder aus dem Aufnahmeraum 2 zurückgezogen werden können und eine erneute Zuführung des biologischen Materials nicht behindern.

Fig. 8a zeigt eine weitere Teildarstellung einer erfindungsgemäßen Vorrichtung. Man erkennt den Mechanismus zum Öffnen und Schließen des Öffnungsmittels 15a und 15b. Das Öffnungsmittel 15a, welches an der Oberseite des Aufnahmeraumes 2 angeordnet ist, setzt sich insbesondere aus einem gelagerten Träger 53 sowie einer darüber angeordneten weiteren Führungseinrichtung zusammen. Der Träger 53, bevorzugt eckig, erstreckt sich rechts und links über die Breite B des Aufnahmeraumes hinaus, wobei an den Enden wenigstens ein, bevorzugt zwei, Führungsmittel 54 angeordnet sind, welche über eine Halterung 52 stabilisiert werden. Besagte Führungsmittel 54 sind zueinander parallel angeordnet und werden durch den gelagerten Träger 53, der über Führungsrinnen verfügt, beabstandet. Sie können sowohl als Rohre (massiv, hohl) oder aber auch als eckige, bevorzugt quadratische Führungsmittel ausgebildet sein.

Eine mögliche Erhaltung der Gleitwirkung kann beispielsweise durch fließfähige Materialien wie Schmierstoffe oder Fluide erreicht werden, wobei die Auswahl nach Beanspruchung und möglicher Materialerwärmung erfolgt. Die Öffnungsbewegung des Öffnungsmittels 15a erfolgt linear in Pressrichtung P. Dies kann bevorzugter Weise mit Hilfe eines hydraulisch gelagerten Bewegungsmittels 55 erfolgen, wobei dieses in einer Halterung 52 angeordnet sein kann und fest mit dem gelagerten Träger 53 verbunden ist. Ferner ist auch denkbar, dass das Bewegungsmittel 55 pneumatisch, mechanisch, oder elektrisch angesteuert werden kann.

Darüber hinaus ist die Geometrie des Bewegungsmittels 55 nicht auf-einen Zylinder beschränkt und kann beispielsweise auch in Form eines eckigen Rohres, welches hohl oder massiv ausgestaltet ist, realisiert werden. Durch die Steuerung des Bewegungsmittels 55 wird gezielt der Träger 53 linear aus der Ausgangsposition herausgeführt, was gleichzeitig einer Öffnung des Aufnahmeraumes 2 von oben gleichkommt.
Nach erfolgreichem Beladen des Aufnahmeraumes 2 mit biologischem Material, welches bevorzugt trocken und/oder nass ist, wird der gelagerte Träger 53 wieder in die Ausgangsposition linear zurück geführt. Es wäre auch denkbar, dass das Bewegungsmittel 55 nicht innerhalb einer Halterung angeordnet ist, sondern vollkommen separat geschaltet wird. Ferner kann die Beabstandung des Trägers 53 beispielsweise federgelagert sein, um bei der Bewegung des Bewegungsmittels 55 entgegen der Pressrichtung den gelagerten Träger 53 wieder in die Ausgangsposition zu bringen. Ferner ist das Bewegungsmittel 55 an mindestens einer Position fixiert. Dies kann beispielsweise an dem gelagerten Träger 53 oder an der Halterung 52 erfolgen.

Das Öffnungsmittel 15b, welches an der Unterseite des Aufnahmeraumes 2 angeordnet ist, ist hier in seiner Ausgangsposition, also im geschlossenen Zustand des Aufnahmeraumes 2, dargestellt. Der Mechanismus zum Öffnen des Öffnungsmittels 15b erfolgt analog zu dem bereits beschriebenen Mechanismus des Öffnungsmittels 15a. Das Öffnungsmittel 15b an der Unterseite des Aufnahmeraumes 2 ist parallel zu dem Öffnungsmittel 15a angeordnet und besteht aus einer rechteckigen Platte, deren Breite über die Breite B des Aufnahmeraumes hinaus geht. An den jeweiligen Enden sind, wie bereits bei Öffnungsmittel 15a genauer erläutert, entsprechende Führungsmittel 54 lokalisiert. Wird nasses biologisches Material eingesetzt, so wird insbesondere ermöglicht, dass das flüssige Medium vor und/oder während des Pressvorgangs aus dem Aufnahmeraum austreten kann, um die Qualität der Presskörper nicht zu beinträchtigen. Dies kann beispielsweise durch nicht extra abgedichtete Öffnungen zwischen dem Öffnungsmittel 15b und den bewegbaren Wänden 12 erfolgen. vorteilhafter Weise wird austretende Flüssigkeit von einem rinnenartigen und/oder kanalartigen System erfasst und vom Aufnahmeraum 2 weggeleitet. Fig. 8b zeigt eine weitere perspektivische Darstellung des Mechanismusses zum Öffnen und Schließen der beiden Öffnungsmittel 15a und 15b.

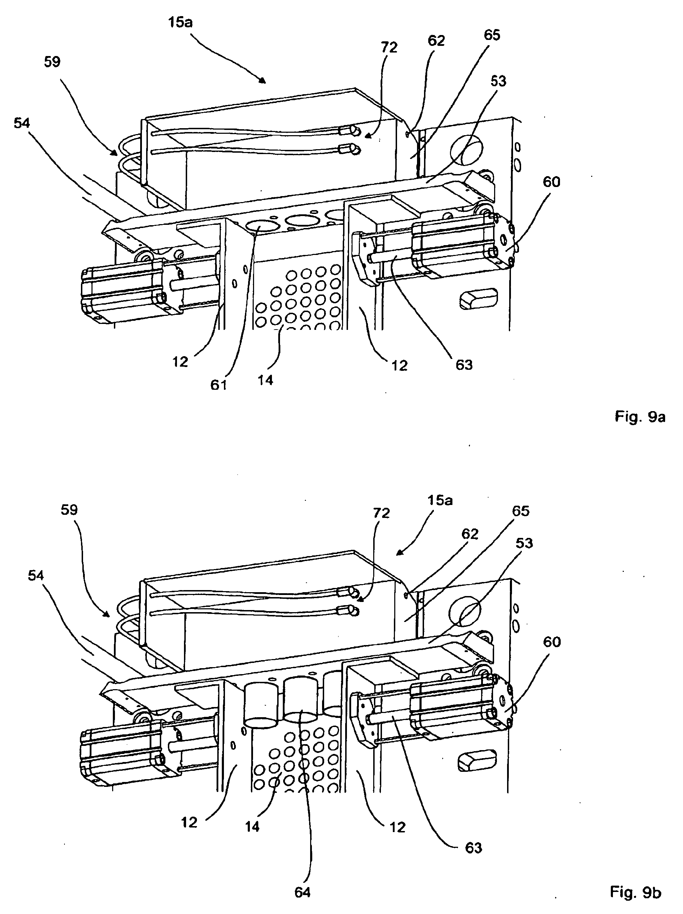

Fig. 9a zeigt einen Querschnitt eines Teils einer erfindungsgemäßen Vorrichtung. Durch die perspektivische Darstellung erkennt man deutlich, dass der gelagerte Träger 53 mindestens eine Öffnung 61 aufweist, die beispielsweise eckig, bevorzugt quadratisch, oder ellipsoidal oder besonders bevorzugt rund ausgebildet ist, und welche sich durch den gesamten gelagerten Träger 53 erstreckt. Die bewegbare Seitenwand 12 wird mittels eines bewegbaren Kolbens 63, welcher bevorzugt mit einer Querschnittseite an der Wand 12 fixiert ist und gleichzeitig in einer zweiten Antriebseinrichtung 60 versenkbar ist, aus der Ursprungsposition ausgelenkt. Die Bewegung erfolgt linear senkrecht zur Pressrichtung P.

Falls eine weitere bewegbare Seitenwand, bevorzugt gegenüber der ersten bewegbaren Wand 12, angeordnet ist, erfolgt die Linearbewegung gegengleich, das heißt, dass sich beide Wände gleichzeitig aufeinander zu bzw. von einander weg bewegen. Der Antrieb kann sowohl mechanisch, elektrisch und bevorzugt hydraulisch und besonders bevorzugt pneumatisch erfolgen. Der bewegbare Kolben 63 kann auch lose an der Wand 12 angeordnet sein, wobei die Rückführung in die Ausgangsposition dann beispielsweise über einen Federmechanismus erfolgt.

In Fig. 9b ist eine weitere Einrichtung zum Vorverdichten des biologischen Materials im Aufnahmeraum 2 dargestellt. Aus den Öffnungen 61 des gelagerten Trägers 53 treten reversibel bewegbare Vorpressmittel 64 hervor, welche bei Bedarf das biologische Material zusätzlich zu den bewegbaren Seitenwänden 12 vorkomprimieren. Diese im oberen Aufbau 65 des Öffnungsmittels 15a versenkbaren Vorpressmittel 64 werden durch Kontrolle der Mediumzu- und - abführeinrichtung 72, welche bevorzugt pneumatisch gesteuert wird, aus ihrer Ausgangsposition vertikal ausgelenkt. Ferner ist auch ein elektrischer, mechanischer oder hydraulischer Antrieb (nicht gezeigt) möglich. Die Vorpressmittel 64 verfügen bevorzugt über einen runden Querschnitt, können darüber hinaus aber auch eckig, bevorzugt quadratisch, ausgebildet sein. An den Stirnseiten können Drucksensoren zur exakten Steuerung der Vorkomprimierung integriert sein.

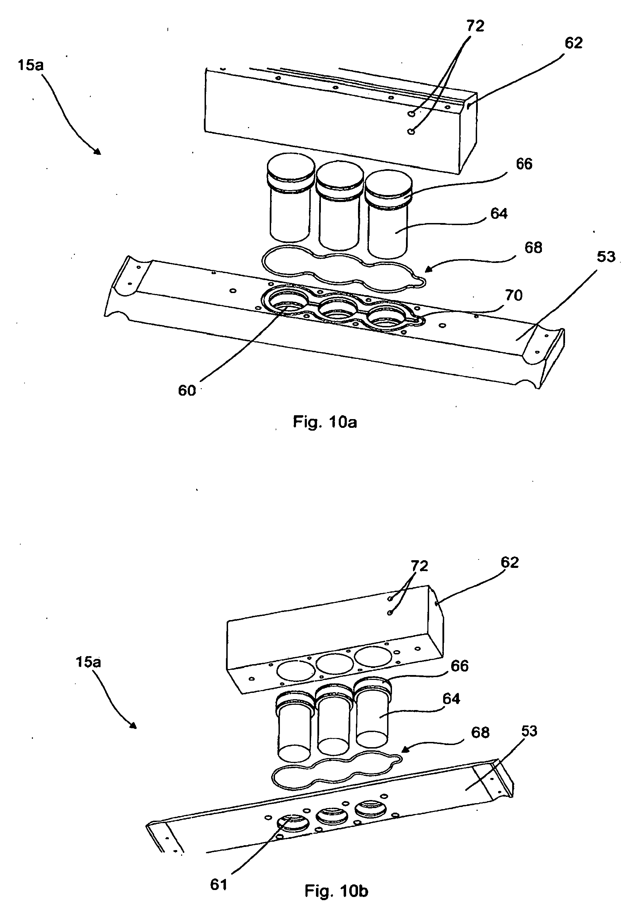

In Fig. 10a und 10b ist jeweils eine Explosionsdarstellung des Öffnungsmittels 15a gezeigt. In Fig. 10a ist der Träger 53 mit beispielsweise drei runden Öffnungen 61 dargestellt, wobei sich deren Geometrie nach der Gestaltung der Vorpressmittel 64 orientiert. Die Öffnungen 61 an der Oberseite des Trägers 53 sind verbreitert ausgefräst, was eine Anordnung einer einteiligen, ondulierten Dichtung 68 ermöglicht, welche beispielsweise aus Kunststoff der aus einem geeigneten Abdichtungsmaterial zusammengesetzt sein kann. Die Ondulierung ermöglicht eine bessere Fixierung der Dichtung 68 und mindert das Spiel während des Bewegungsvorganges. Des Weiteren können auch der Anzahl der Vorpressmittel 64 entsprechende Dichtungen vorgesehen sein, um die Öffnungen 61 separat abzudichten.

Die Vorpressmittel 64 erweitern sich an dem zum Aufnahmeraum 2 abgewandten Ende zu einem Vorpressmittelkopf 66, welcher das Rückführen der Vorpressmittel in die Ausgangsposition ermöglicht. Es ist denkbar, dass um den oberen Abschnitt der Vorpressmittelköpfe 66 ein Material zum Schutz oder zur Reibungsminimierung segmentartig oder vollständig umschließend angeordnet ist.

Die Vorpressmittel 64 sind im oberen Aufbau 65 des Öffnungsmittels 15a bevorzugt komplett versenkbar und werden über die Medium Zu- und -abführeinrichtung 72 bevorzugt pneumatisch gesteuert. Im Falle eines Überdrucks kann dieser mittels der Ausgleichöffnung 62 abgebaut werden. Fig. 10b zeigt eine leicht variierte Darstellung von Fig. 10a.

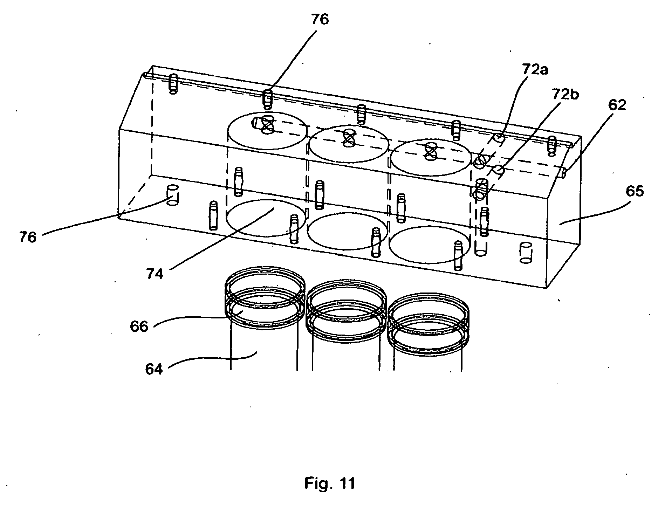

In Fig. 11 wird ein weiterer Teil eines Öffnungsmittels einer erfindungsgemäßen Vorrichtung gezeigt. Man erkennt die Aussparungen 74 zum Versenken der Vorpressmittel 64 im oberen Aufbau 65. Darüber hinaus sind auch die Zu- und Abführleitungen 72 des Mediums für den Antrieb der Vorpressmittel 64 schematisch dargestellt. Durch die obere Öffnung 72 a wird das Medium zugeführt, wobei die Vorpressmittel 64 aus ihrer Ausgangsposition ausgelenkt werden und sich linear senkrecht nach unten bewegen. Um die Vorpressmittel 64 wieder zurück in ihre Ausgangsposition zu befördern, wird an der unteren Öffnung 72b das Medium zugeführt. Als Medium kann beispielsweise Luft, bevorzugt Pressluft, Wasser, Öl oder andere hydraulische Flüssigkeiten eingesetzt werden. Durch die exakte Kontrolle mit Hilfe von Steuerungsventilen, bevorzugt Magnetventilen, ist es möglich, die Vorpressmittel 64 gesamt oder auch nur teilweise aus ihrer Ausgangsposition auszulenken und das biologische Material mehr oder weniger zu verdichten. Die Aussparungen 76 dienen zur Fixierung des Trägers 53 mit dem oberen Aufbau 65, beispielsweise durch Schrauben oder Nieten.

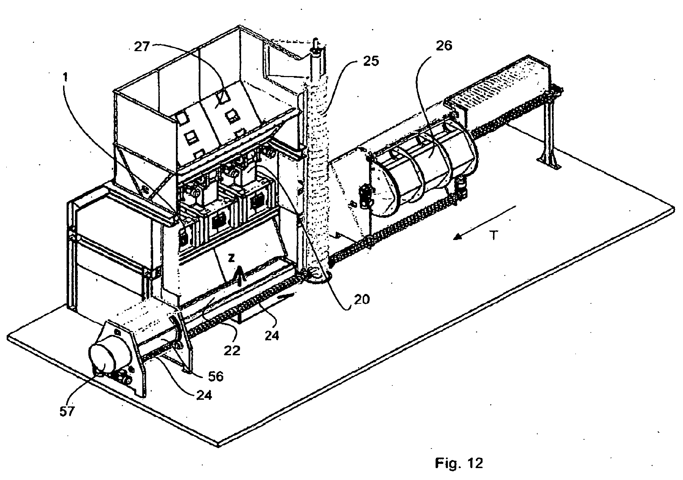

Fig. 12 zeigt eine Anordnung von Vorrichtung 1 in einer Produktionsanlage, wobei mehrere dieser Vorrichtungen 1, mindestens jedoch eine, in Reihe oder / und parallel zueinander angeordnet sind. Die Presskolben der Antriebseinrichtung 10 des Stempels 6 sind gleichläufig, bevorzugt aber gegenläufig versetzt angeordnet, d.h., dass der Pressvorgang in allen Aufnahmeräumen versetzt stattfindet. Bei einer vorteilhaften Ausführungsform sind drei Vorrichtungen 1, bevorzugt in Reihe angeordnet, welche mittels zumindest einer Antriebseinrichtung 10 (hier nicht dargestellt) gesteuert werden. Dies ermöglicht, dass zwei Vorrichtungen 1 in Bewegung sind, sowohl in Pressrichtung P als auch entgegengesetzt, während sich die dritte Vorrichtung 1 in Ruheposition befindet und deren Aufnahmeraum 2 mit biologischem Material befüllbar ist. Dies führt zu einer Erhöhung der Taktzeit und Effektivität. Biologisches Material wird mittels einer Fördereinrichtung beispielsweise einem Transportband oder einer Schnecke in eine Zuführeinrichtung 26 für Flüssigkeiten und / oder Additiven eingeführt. Besagte Zuführeinrichtung 26 kann vorteilhaft als Trommel ausgebildet sein, um eine gleichmäßige Homogenisierung aller eingebrachten Materialien zu ermöglichen.

Dies kann beispielsweise linear, in einer Schaukelbewegung oder rotatorisch mit hoher Frequenz erfolgen. Besagte Zuführeinrichtung 26 verfügt über mindestens eine Öffnung (nicht gezeigt) zum Zuführen der Flüssigkeit / Additive. Diese kann beispielsweise in Form einer Platte mit Scharnieren oder einer Schrauböffnung ausgebildet sein. Das aufbereitete biologische Material wird mit einem weiteren Fördermittel, hier einem Schneckenförderer 25, vertikal nach oben transportiert. Dieser Hubvorgang kann auch beispielsweise schräg oder diagonal erfolgen. Das biologische Rohmaterial wird einem Vorratsraum 27 zugeführt, welcher komplett befüllbar ist und somit eine kontinuierliche Materialversorgung des Aufnahmeraumes 2 sicherstellt. Die fertigen Presskörper aus der Vorrichtung 1 treffen auf eine Abfördereinrichtung 22, welche die Presskörper einer Sortierungseinrichtung 56 zuführen, wo Kleinmaterial, wie beispielsweise Bruchfragmente der Presskörper, abgetrennt und mittels einer Rückförderungseinrichtung 24 entgegen der Transportrichtung T zum Schneckenförderer 25 transportiert wird. Die fertigen Presskörper werden durch den Auslass 57 abgeführt. Bevorzugt weisen die fertigen Presskörper einen Durchmesser von 6 bis 35 mm, besonders bevorzugt einen Durchmesser von 12 bis 16 mm auf. Unverbrauchtes, unverpresstes Material aus dem Aufnahmeraum 2 wird hingegen über eine Rückführungseinrichtung 24 entgegen der allgemeinen Transportrichtung T wieder dem Schneckenförderer 25 zugeführt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Aufnahmeraum
- 4: erste Lochwand
- 6: Stempel
- 7: Führungsrinne
- 8: Pressstifte
- 8a: Stirnfläche
- 9: Träger
- 10: Antriebseinrichtung
- 11: Führungszylinder
- 12: bewegbare Wand des Aufnahmeraumes
- 14: zweite Lochwand
- 15 a: Öffnungsmittel (oben)
- 15 b: Öffnungsmittel (unten)
- 16: Kupplung
- 18: Abbrucheinrichtung
- 20: Zuführeinrichtung des biologischen Materials
- 22: Abfördereinrichtung der Presskörper
- 24: Rückführungseinrichtung
- 25: Schneckenförderer
- 26: Zuführeinrichtung für Flüssigkeit und / oder Additive
- 27: Vorratsraum
- 28: Rahmen
- 29: entnehmbare Matrize
- 30: Heizmatrize
- 31: Abstandslochwand
- 32: Lochscheibe
- 33: Öffnung
- 34: Rohrkanal
- 36: Abbruchkanten
- 38: Heizelement
- 40: Aussparung für Heizelement
- 42: Hohlkanal
- 44: Pressstiftkopf
- 52: Halterung
- 53: gelagerter Träger
- 54: Führungsmittel
- 55: Bewegungsmittel
- 56: Sortierungseinrichtung
- 57: Auslass für Presskörper
- 58: Rückförderungseinrichtung
- 59: Mediumzuführung
- 60: Antriebseinrichtung für bewegbare Seitenwände
- 61: Öffnung in gelagerten Träger 53
- 62: Öffnung für Druckausgleich
- 63: bewegbarer Kolben
- 64: Vorpressmittel
- 66: Vorpressmittelkopf
- 68: Dichtung
- 72a/b: Mediumzu- / -abführeinrichtungen
- 74: Aussparung zum Versenken des Vorpressmittels
- 76: Aussparung für Fixierung
- P: Pressrichtung

## Patentansprüche

1. Vorrichtung (1) zur Herstellung von Presskörpern aus biologischem Material mit einem Aufnahmeraum (2) zur Aufnahme des biologischen Materials wobei der Aufnahmeraum zumindest eine Lochwand (4) mit einer Vielzahl von Öffnungen aufweist und mindestens einem in dem Aufnahmeraum (2) angeordneten und gegenüber dem Aufnahmeraum (2) bewegbaren Stempel (6), wobei der Stempel (6) mehrere Pressstifte (8) zum Durchpressen des Materials durch die Öffnungen aufweist,
**dadurch gekennzeichnet, dass** weitere bewegbare Wand (12) des Aufnahmeraums (2) zum Vorpressen des biologischen Materials angeordnet ist, wobei
der Aufnahmeraum (2) ein Öffnungsmittel (15a) zum Verschließen der Oberseite des Aufnahmeraumes umfasst als auch eine bewegliche Seitenwand (12), welche senkrecht zur Pressrichtung (P) bewegbar ist und somit einer Vorkomprimierung des biologischen Materials dient.

2. Vorrichtung nach Anspruch 1, **dadurch gekennzeichnet, dass** die Pressstifte (8) in Längsrichtung gleichmäßig hinsichtlich ihres Querschnittes sind.

3. Vorrichtung nach einem der vorangegangenen Ansprüche, **dadurch gekennzeichnet, dass**
eine Antriebseinrichtung (10), bevorzugt hydraulisch, zum Antrieb des Stempels (6) vorhanden ist.

4. Vorrichtung nach einem der vorangegangenen Ansprüche,
**dadurch gekennzeichnet, dass**
Stempel (6) als gegenüber dem Aufnahmeraum (2) beweglicher Kolben angeordnet ist.

5. Vorrichtung nach einem der vorangegangenen Ansprüche,
**dadurch gekennzeichnet, dass**
die erste Lochwand (4) eine Seitenwand des Aufnahmeraumes (2) ist.

6. Vorrichtung nach wenigstens einem der vorangegangenen Ansprüche,
**dadurch gekennzeichnet, dass**
zwischen dem Stempel (6) und der ersten Lochwand (4) zumindest zeitweise eine weitere Lochwand (14) angeordnet ist.

7. Vorrichtung nach wenigstens einem der vorangegangenen Ansprüche,
**dadurch gekennzeichnet, dass**
der Aufnahmeraum (2) mindestens ein Öffnungsmittel (15) aufweist damit das biologische Material dem Aufnahmeraum zuführbar und / oder aus dem Aufnahmeraum (2) abführbar ist.

8. Vorrichtung nach wenigstens einem der vorangegangenen Ansprüche,
**dadurch gekennzeichnet, dass**
in Förderrichtung der Pressrohlinge eine Abbruchvorrichtung (18) zum Erzeugen der Presskörper vorgesehen ist.

9. Anlage mit einer Vorrichtung (1) zur Herstellung von Presskörpern aus biologischem Material nach einem der vorangegangenen Ansprüche und einer Zuführeinrichtung (20) für das biologische Material, einem Aufnahmeraum (2) für das biologische Material, einer Abfördereinrichtung (22) für die Presskörper, welche stromabwärts bezüglich einer Pressvorrichtung zum Pressen angeordnet ist und einer Rückführungseinrichtung (24) von überschüssigem Material zu der Vorrichtung (1) zur Herstellung von Presskörpern.

10. Anlage nach Anspruch 9
**dadurch gekennzeichnet, dass**
eine weitere vorgelagerte Zuführungseinrichtung (26) für Flüssigkeiten und / oder Additiven angeordnet ist.

## Claims

1. Device (1) for producing pressed bodies from biological material, comprising a receiving chamber (2) for receiving the biological material, wherein the receiving chamber has at least one perforated wall (4) with a plurality of openings, and at least one ram (6) which is arranged in the receiving chamber (2) and is movable with respect to the receiving chamber (2), wherein the ram (6) has a plurality of pressing pins (8) for pressing the material through the openings, **characterized in that** a further movable wall (12) of the receiving chamber (2) is arranged for pre-pressing the biological material, wherein the receiving chamber (2) comprises an opening means (15a) for closing the top of the receiving chamber, and also a movable side wall (12) which is movable perpendicular to the pressing direction (P) and thus serves for pre-compressing the biological material.

2. Device according to claim 1, **characterized in that** the pressing pins (8) are of uniform cross-section in the longitudinal direction.

3. Device according to any one of the preceding claims, **characterized in that** a drive device (10), preferably a hydraulic drive device, is provided for driving the ram (6).

4. Device according to any one of the preceding claims, **characterized in that** the ram (6) is arranged as a piston which is movable relative to the receiving chamber (2).

5. Device according to any one of the preceding claims, **characterized in that** the first perforated wall (4) is a side wall of the receiving chamber (2).

6. Device according to at least one of the preceding claims, **characterized in that** a further perforated wall (14) is arranged, at least at times, between the ram (6) and the first perforated wall (4).

7. Device according to at least one of the preceding claims, **characterized in that** the receiving chamber (2) has at least one opening means (15) so that the biological material can be fed to the receiving chamber and/or discharged from the receiving chamber (2).

8. Device according to at least one of the preceding claims, **characterized in that** a breaking-off device (18) for producing the pressed bodies is provided in the conveying direction of the pressed blanks.

9. System comprising a device (1) for producing pressed bodies from biological material, according to any one of the preceding claims, and a feed device (20) for the biological material, a receiving chamber (2) for the biological material, a removal conveyor (22) for the pressed bodies, which is arranged downstream of a pressing device provided for pressing purposes, and a recycling device (24) for recycling excess material to the device (1) for producing pressed bodies.

10. System according to claim 9, **characterized in that** a further upstream feed device (26) for liquids and/or additives is provided.

## Revendications

1. Système (1) pour la fabrication de corps comprimés à partir d'un matériau biologique, avec un compartiment de réception (2) destiné à recevoir le matériau biologique, ledit compartiment de réception présentant au moins une paroi perforée (4) d'une pluralité d'orifices et au moins un poinçon (6) disposé dans le compartiment de réception (2) et mobile par rapport au compartiment de réception (2), ledit poinçon (6) comportant plusieurs tiges de pression (8) destinées à pousser le matériau à travers les orifices,
**caractérisé en ce que**
une autre paroi mobile (12) du compartiment de réception (2) est prévue pour la pré-compression du matériau biologique,
ledit compartiment de réception (2) comprenant un moyen d'ouverture (15a) pour la fermeture du haut du compartiment de réception, ainsi qu'une paroi latérale mobile (12), laquelle est déplaçable perpendiculairement à la direction de compression (P) et sert ainsi à la pré-compression du matériau biologique.

2. Système selon la revendication 1,
**caractérisé en ce que**
les tiges de pression (8) ont une section transversale homogène dans la direction longitudinale.

3. Système selon une des revendications précédentes,
**caractérisé en ce que**
un dispositif d'entraînement (10), préférentiellement hydraulique, est présent pour l'entraînement du poinçon (6).

4. Système selon une des revendications précédentes,
**caractérisé en ce que**
le poinçon (6) est prévu comme piston mobile par rapport au compartiment de réception (2).

5. Système selon une des revendications précédentes,
**caractérisé en ce que**
la première paroi perforée (4) est une paroi latérale du compartiment de réception (2).

6. Système selon au moins une des revendications précédentes,
**caractérisé en ce que**
une autre paroi perforée (14) est au moins temporairement disposée entre le poinçon (6) et la première paroi perforée (4).

7. Système selon au moins une des revendications précédentes,
**caractérisé en ce que**
le compartiment de réception (2) comporte au moins un moyen d'ouverture (15) pour que le matériau biologique puisse être conduit vers le compartiment de réception et/ou être évacué du compartiment de réception (2).

8. Système selon au moins une des revendications précédentes,
**caractérisé en ce que**
un système de sectionnement (18) pour produire des corps comprimés est prévu dans la direction de transport des ébauches à comprimer.

9. Installation avec un système (1) pour la fabrication de corps comprimés à partir d'un matériau biologique, selon une des revendications précédentes, et un dispositif d'amenée (20) pour le matériau biologique, un compartiment de réception (2) pour le matériau biologique, un dispositif d'évacuation (22) pour les corps comprimés, lequel est disposé en aval d'un système de presse destiné à la compression, et un dispositif de retour (24) de matériau en excédent vers le système (1) pour la fabrication de corps comprimés.

10. Installation selon la revendication 9,
**caractérisée en ce que**
un autre dispositif d'amenée (26) en amont est prévu pour des liquides et/ou des additifs.
